# EUROPEAN PATENT SPECIFICATION

(11) **EP 4 068 022 B1**
(45) Date of publication and mention of the grant of the patent: **23.07.2025**
(21) Application number: 22165037.7
(22) Date of filing: 29.03.2022
(51) Int. Cl.: G05B 19/418

(54) **FILLING PLANT AND METHOD OF OPERATING A FILLING PLANT FOR PACKAGING POURABLE FOOD PRODUCTS INTO COMPOSITE PACKAGES**
ABFÜLLANLAGE UND VERFAHREN ZUM BETREIBEN EINER ABFÜLLANLAGE ZUM VERPACKEN VON FLIESSFÄHIGEN NAHRUNGSMITTELN IN VERBUNDPACKUNGEN
INSTALLATION DE REMPLISSAGE ET PROCÉDÉ DE FONCTIONNEMENT D'UNE INSTALLATION DE REMPLISSAGE D'EMBALLAGE DE PRODUITS ALIMENTAIRES POUVANT ÊTRE VERSÉS DANS DES EMBALLAGES COMPOSITES

(30) Priority: 31.03.2021 EP 21166178
(43) Date of publication of application: 05.10.2022
(73) Proprietor: Tetra Laval Holdings & Finance S.A., 1009 Pully (CH)
(72) Inventor: CORAZZARI, Gianni, 41032 Cavezzo (Modena) (IT); PELLACANI, Alex, 41034 Finale Emilia (Modena) (IT)
(74) Representative: Tetra Pak Patent Attorneys

(56) References cited:
- EP-A1- 1 741 341
- EP-A1- 3 633 474
- US-A1- 2013 178 969

## Description

### TECHNICAL FIELD

The present invention relates to a filling plant for the packaging of pourable food products into composite packages.

Advantageously, the present invention also relates to a method of operating a filling plant for the packaging of pourable food products into composite packages.

### BACKGROUND ART

As is known, many liquid or pourable food products, such as fruit juice, UHT (ultra-high-temperature treated) milk, wine, tomato sauce, etc., are sold in composite packages made of a multilayer composite packaging material.

A typical example is the parallelepiped-shaped package for pourable food products known as Tetra Brik Aseptic (registered trademark), which is made by sealing and folding a laminated strip packaging material. The packaging material has a multilayer structure comprising a carton and/or paper base layer, covered on both sides with layers of heat-seal plastic material, e.g. polyethylene. In the case of aseptic packages for long-storage products, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Composite packages of this sort are normally produced within fully automatic filling plants, which at least form the composite packages from the multilayer composite packaging material and fill the composite packages with the pourable food product.

A typical filling plant comprises at least a filling machine, which forms the composite packages from the multilayer composite packaging material and which also fills the composite packages with the pourable food product.

Additionally, such filling plants also comprise downstream treatment equipment, which receives the composite packages from the filling machine and which execute additional treatments on the composite packages. E.g. the downstream treatment equipment could comprise a buffer unit for temporarily buffering the composite packages and/or an application unit for applying e.g. straws on the composite packages and/or a grouping unit for grouping a plurality of composite packages together.

Furthermore, it is known that during the operation of the filling plant it is also necessary to control the quality of the produced composite packages. Therefore, from time to time one or more composite packages are withdrawn from the filling plant and are subjected to quality control measurements.

From time to time, it may also be necessary to control the hygienic conditions within at least portions of the filling plant.

Additionally, it is also known that a filling plant does not only fill one kind of pourable food product into one type and/or format of composite package, but it frequently occurs that after a first production cycle during which a first pourable food product is filled into a first type and/or format of composite package a second production cycle is to be actuated during which a second type of pourable food product is filled into a second type and/or format of composite package.

This means that the operational parameters, which define the operation of the filling plant and/or any other needed operations, need to be (re)set accordingly.

There also occur other situations (e.g. filling the same pourable food product, but into a composite package differing in its aesthetical appearance) which make it necessary to (re)set the operational parameters of the filling plant.

During the (re)setting of the operational parameters, a technical operator must modify these operational parameters through a human-machine-interface.

Even though the known filling plants operate satisfyingly well, an inconvenience has been encountered with the time-consuming feeding of the operational parameters by means of a well-trained technical operator.

Additionally, it has been found that from time to time a technical operator may set one or more wrong operational parameters.

Furthermore, it may also happen that a technical operator may forget to set the operational parameters and/or to set them only with a time delay.

Therefore, a need is felt in the sector to further improve the known filling plants and their method of operation. Documents EP3633474 A1, US2013/178969 A1 and EP1741341 A1 are examples of filling plants according to the preamble of claim 1.

### DISCLOSURE OF INVENTION

It is therefore an object of the present invention to provide in a straightforward and low-cost manner an improved filling plant, which allows to resolve at least one of the above-mentioned inconveniences.

It is a further object of the present invention to provide in a straightforward and low-cost manner an improved method of operating a filling plant, which allows to resolve at least one of the above-mentioned inconveniences.

According to the present invention, there is provided a filling plant according to the independent claim 1.

Preferred embodiments of the filling plant are claimed in the claims being directly or indirectly dependent on claim 1.

According to the present invention, there is also provided a method of operating a filling plant according to the independent claim 10.

Preferred embodiments of the method are claimed in the claims being directly or indirectly dependent on claim 10.

### BRIEF DESCRIPTION OF THE DRAWINGS

A non-limiting embodiment of the present invention will be described by way of example with reference to the accompanying drawings, in which:
Figure 1 is a schematic view of a filling plant, with parts removed for clarity;
Figure 2 is a perspective view of a portion of the filling plant of Figure 1, with parts removed for clarity;
Figure 3 is a flow diagram disclosing operation of the filling plant of Figure 1; and
Figure 4 shows a table containing different example identification codes and examples of possible information associated to the identification codes;
Figure 5 shows a table containing an example of associating a Best Before Date to composite packages formed from a multilayer packaging material and filled with a defined pourable product; and
Figure 6 illustrates an example composite package produced in the filling plant of Figure 1.

### BEST MODES FOR CARRYING OUT THE INVENTION

Number 1 indicates as a whole a filling plant for packaging a pourable food product, in particular a liquid food product, such as milk, cream, fruit juice, wine, tomato sauce, sugar, salt, emulsions, solutions containing solid particles (e.g. legumes), etc., into a composite package 2 formed from a multilayer composite packaging material 3.

Multilayer composite packaging material 3 may comprise at least a layer of fibrous material, such as e.g. a paper or cardboard layer, and at least two layers of heat-seal plastic material, e.g. polyethylene, interposing the layer of fibrous material in between one another. One of these two layers of heat-seal plastic material defines an inner face of the composite packages 2 eventually contacting the pourable food product packaged within composite packages 2.

According to some possible non-limiting embodiments, multilayer composite packaging material 3 may also comprise a layer of gas- and light-barrier material, e.g. aluminum foil or ethylene vinyl alcohol (EVOH) film, in particular being arranged between one of the layers of the heat-seal plastic material and the layer of fibrous material. Preferentially, multilayer composite packaging material 3 may also comprise a further layer of heat-seal plastic material being interposed between the layer of gas- and light-barrier material and the layer of fibrous material.

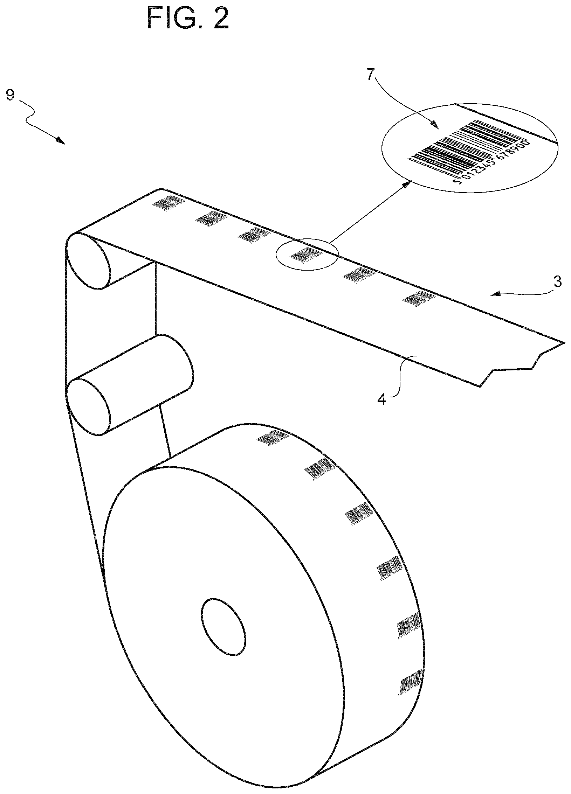

According to the invention and with particular reference to Figure 2, multilayer composite packaging material 3 is provided in the form of a web 4, in particular being wound up on a bobbin. Accordingly, filling plant 1 is configured to manipulate, in a manner as will be described further below in more detail, web 4 so as to obtain composite packages 2 being filled with the pourable food product.

In more detail, web 4 comprises a succession of connected blanks. In particular, the blanks are defined by a succession of repeated patterns provided on web 4 of multilayer composite packaging material, preferentially each pattern defining at least partially the aesthetical appearance of the finalized composite package 2.

Alternatively, multilayer composite packaging material 3 may be provided in the form of single package blanks, which, in use, are singularly formed and filled.

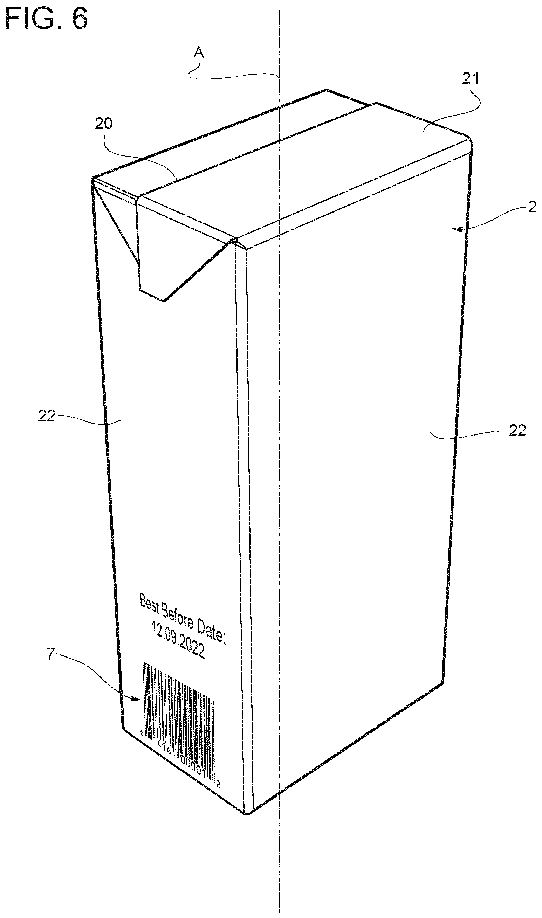

In more detail and with particular reference to Figure 6, each composite package 2 may extend along a longitudinal axis A and has a longitudinal seam portion (extending along the respective longitudinal axis A) and a pair of transversal sealing bands, in particular a transversal top sealing band 20 and a transversal bottom sealing band. In particular, each composite package 2 may have a substantially parallelepiped structure.

Furthermore, each composite package 2 may comprise at least two transversal walls (being transversal to the respective longitudinal axis A) and being disposed at opposite sides of composite package 2 and a plurality of lateral walls 22 extending between the transversal walls.

More specifically, one respective transversal wall of each composite package 2 may define a bottom wall and the other respective transversal wall may define a top wall 21. In particular, the bottom wall may define a support surface adapted to be placed on a (horizontal) plane, such as e.g. a shelf within a distribution point, and the top wall is opposed to the bottom wall.

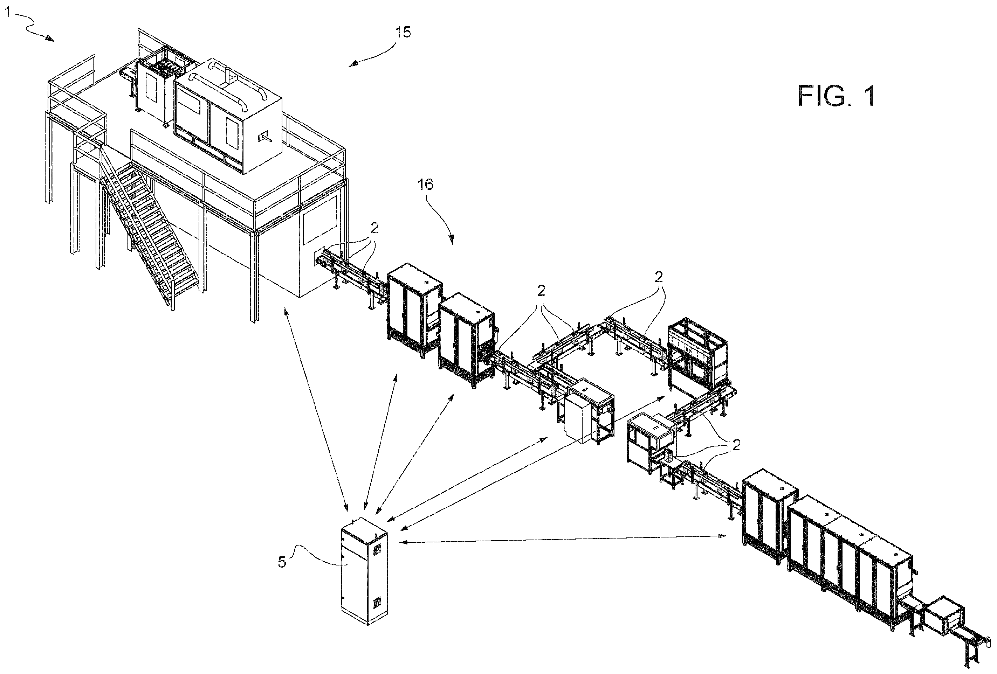

With particular reference to Figure 1, filling plant 1 is at least configured to form composite packages 2 from multilayer composite packaging material 3 and to fill composite packages 2 with the pourable food product.

Moreover, filling plant 1 comprises at least:
- a control device 5 configured to control operation of filling plant 1; and
- an input device operatively connected to control device 5 and configured to receive an identification code 7 indicative of the specific multilayer composite packaging material 3 and/or composite packages 2 (to be formed from the specific multilayer composite packaging material 3) and to send a signal about identification code 7 to control device 5.

Furthermore, control device 5 is configured to set operational parameters of filling plant 1 as a function of identification code 7.

According to some possible non-limiting embodiments, control device 5 may comprise a plurality of single control units associated to one or more portions of filling plant 1. In particular, one or more single control units may be configured to set the operational parameters of the one or more portions of filling plant 1.

Additionally or in alternative, control device 5 may comprise a central control unit associated to a plurality of portions of filling plant 1 or to filling plant 1 as a whole.

It should be noted that identification code 7 is indicative of one or more characteristics of the specific multilayer composite packaging material 3 used and/or the composite packages 2 to be formed, in use, from the specific multilayer composite packaging material 3 and/or of the pourable food product to be filled. In particular, identification code 7 is a unique identifier of the specific multilayer composite packaging material 3 and/or the respective composite packages 2 to be formed, in use, from the specific multilayer composite packaging material 3 and/or of the pourable food product which is to be filled into composite packages 2; i.e. the modification of also only one characteristic of the specific multilayer composite packaging material 3 and/or the respective composite packages 2 and/or the specific product to be filled results in a distinct and unique identification code 7.

In other words, identification code 7 is unambiguously associated to the specific multilayer composite packaging material 3 and/or the respective composite packages 2 and/or the specific pourable product to be filled.

According to some possible non-limiting embodiments, identification code 7 is provided and/or codified in the form of a barcode and/or in the form of a RFID chip and/or a graphical symbol (distinct from a barcode) associated to and/or printed onto multilayer composite packaging material 3.

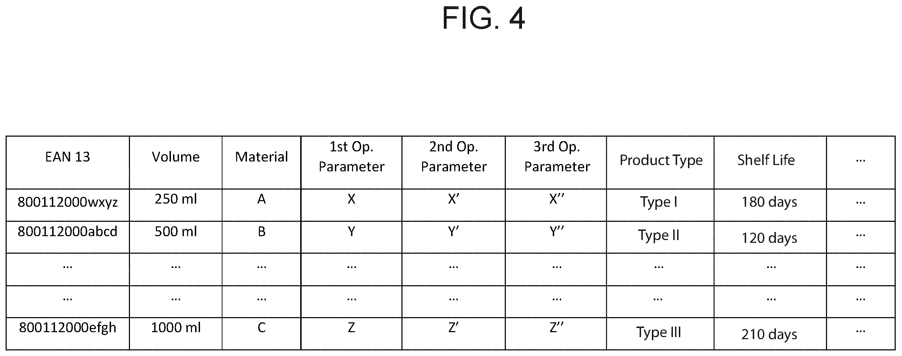

According to the specific embodiment shown in Figures 2 and 4, identification code 7 corresponds to a European article number (EAN), in particular associated to and/or codified in the form of a barcode.

More specifically, the EAN may be provided in the form of a 13-figure digit.

It should be noted that according to the specific embodiment shown, the barcode is a one-dimensional barcode. Alternatively, the barcode could be a two-dimensional one.

With particular reference to Figure 2, each blank of web 4 carries the respective identification code 7, in particular the respective barcode and/or the respective EAN. It must be noted that in such a case each blank carries the same identification code 7, in particular because the multiple composite packaging material 3 and the respective composite packages 2 to be formed are (substantially) identical and also the pourable food product to be filled is the same.

Alternatively or additionally, identification code 7 may be attached onto web 4 by means of a single information paper removably or fixedly attached to web 4 and/or any support carrying web 4. It is also possible that the information paper may be attached onto a protection envelope covering web 4.

Alternatively and according to the embodiment that the multiple packaging material 3 is provided in the form of single blanks, each blank comprises the respective identification code 7 (the same for each one of the blanks). Alternatively or in addition, a packaging carrying the single blanks may carry the identification code 7 or the identification code 7 may be provided on a paper associated to the single blanks.

According to some preferred non-limiting embodiments, identification code 7 is also provided on the finalized composite package 2 (see Figure 6).

According to some preferred non-limiting embodiments, identification code 7 (see e.g. Figure 4) may be indicative of a volume of the finalized composite packages 2 (formed from multilayer composite packaging material 3 and filled with the pourable food product) and/or a volume of the pourable food product filled within the finalized composite packages 2 and/or a name of the producer (i.e. the name of the filler) of composite packages 2 and/or about the pourable food product and its characteristics (such as the kind of the pourable food product and/or processing information and/or storing information and/or storing temperature and/or others) and/or a shelf life of the pourable food product to be filled and/or recipe information and/or details of the multilayer composite packaging material 3 and/or the repeated pattern printed on multilayer composite packaging material 3 and/or a type and/or format of finalized composite packages 2 and/or the name of the commissioner and/or the name of a distributor and/or indications about the target market.

Furthermore, control device 5 may be configured to control filling plant 1 at least into:
- a set-up configuration during which the input device is configured to receive the identification code 7 and during which control device 5 itself is configured to set the operational parameters as a function of identification code 7; and
- a production configuration during which filling plant 1 forms, in use, composite packages 2 from multilayer composite packaging material 3 and fills, in use, composite packages 2 with the pourable food product.

It should be noted that the operational parameters may fully or at least partially define operation of filling plant 1, in particular when being controlled into the production configuration.

According to some possible non-limiting embodiments, control device 5 may be configured to allow for a modification of (only) some of the operational parameters by means of a technical operator after setting of the operational parameters. In this manner, the technical operator may have the possibility to correct and/or optimize some of the operational parameters. Such a modification may also be possible during the formation and filling of composite packages 2.

In other words, the operational parameters set by control device 5 may substantially define default operational parameters, which can be modified by a technical operator.

More specifically, at least some or all of the operational parameters may define production conditions (see further below for more information) of filling plant 1. In more detail, at least some or all of the operational parameters may define the operation of all or at least some portions of filling plant 1.

Additionally or in alternative, at least some or all of the operational parameters may define a quality control protocol for determining and/or controlling the quality of composite packages 2 and/or a test plan for assessing, in use, hygienic information during the formation and the filling of composite package 2 and/or a cleaning-in-place protocol and/or a sterilization-in-place protocol.

E.g. one or more operational parameters associated to and/or defining the quality control protocol may define a sampling plan for (automatically and/or manually) withdrawing composite packages 2 from filling plant 1 so as to expose the withdrawn composite packages 2 to measurements for determining and/or controlling the quality of composite packages **2.**

Furthermore, one or more operational parameters associated to and/or defining the test plan may define on how and/or when and/or where the hygienic information is to be assessed.

Additionally, one or more operational parameters associated to and/or defining the cleaning-in-place protocol may define when the production is to be stopped and/or interrupted so as to execute the needed cleaning of at least some portions of filling plant 1.

Furthermore, one or more operational parameters associated to and/or defining the sterilization-in-place plan may define when the production is to be stopped and/or interrupted so as to execute the needed sterilization of at least some portions of filling plant 1.

Additionally, filling plant 1 comprises a memory unit containing the operational parameters associated to (each specific possible) identification code 7 (see e.g. Figure 4). In particular, the memory unit contains a plurality of sets of operational parameters, each set being associated to one respective and unique identification code 7. This is advantageous as the filling plant 1 may from time to time operate with one kind of multilayer composite packaging material 3 for producing the respective composite packages 2 and at other times to operate with another kind of multilayer composite packaging material 3 for producing another kind of composite package 2. However, each time the unique identification code 7 allows an automatic setting of the respective operational parameters.

Alternatively or in addition, the memory unit may also store other information associated to each identification code 7. Such information may for example include the shelf life of the pourable product associated to the specific identification code 7.

E.g. Figure 4 illustrates an example of the information possibly stored within the memory unit. To each identification code 7, in the specific case an EAN (13 digit number), specific information is associated, such as e.g. the volume of composite package 2 and/or the volume of the filled pourable food product per composite package 2, the shelf life of the specific pourable food product, information about multilayer composite packaging material 3 and a plurality of operational parameters.

Preferentially, each set of operational parameters and/or other information associated to the identification code 7 is loaded into and/or stored within the memory unit, in particular prior to the first time production with the respective multilayer composite packaging material 3 for producing for the first time the respective composite packages 2.

Moreover, control device 5 may be operationally connected to the memory unit and may be configured to read the operational parameters and/or the other information from the memory unit and to set the operational parameters read from the memory unit.

According to some possible non-limiting embodiments, control device 5 may be designed such that the operational parameters (of one respective set) may be modified and/or updated (e.g. by a technical operator). Furthermore, control device 5 may be configured to create a respective new set of operational parameters and/or to overwrite the existing set of operational parameters (associated to the respective identification code 7).

In further detail, the input device comprises an automatic reader for automatically reading identification code 7.

According to some possible non-limiting embodiments, the automatic reader may comprise a handheld device (such as e.g. a barcode reader) to be operated by a technical operator and/or may comprise a reading device arranged within a portion, in particular an inlet portion (see Figure 2), of filling plant 1 and being configured to read identification code 7. Preferentially, the inlet portion may be designed to receive multilayer composite packaging material 3, and in particular multilayer composite packaging material 3 may be directed to further processing stations of filling plant 1 (see for more details further below) starting from inlet portion 9.

According to the invention, the input device is configured to read identification code 7 from web 4, in particular one of the blanks of web 4.

With particular reference to Figure 1, filling plant 1 may comprise at least:
- a filling machine 15 configured to form composite packages 2 from multilayer composite packaging material 3 and to fill composite packages 2 with the pourable food product; and
- at least one downstream treatment equipment 16 configured to receive composite packages 2 from filling machine 15 and to execute, in use, one or more further treatment steps on composite packages 2.

Additionally, filling plant 1 may also comprise a pourable food product conditioning device for conditioning the pourable food product. The pourable food product conditioning device may be connected to filling machine 15 so as to direct the pourable food product to filling machine 15.

Preferentially, control device 5 may be operatively connected to filling machine 15 and/or downstream treatment equipment 16 and/or the pourable food product conditioning device.

Additionally, control device 5 may be configured to set some or all of the operational parameters of filling machine 15 and/or downstream treatment equipment 16 as a function of identification code 7 (so as to set the production conditions of filling plant 1).

In more detail, filling machine 15 may comprise at least:
- a conveying device for advancing web 4 of multilayer packaging material 3 along an advancement path;
- a tube forming device for forming a tube from the, in use, advancing web 4 of multilayer packaging material 3;
- a sealing device for longitudinally sealing the tube;
- a filling device, in particular being in fluidic connection with the pourable food product conditioning device, for filling the tube with the pourable food product; and
- a package forming unit for forming the tube and to transversally seal the tube for forming composite packages 2 from the tube filled with the pourable food product.

In more detail, the package forming unit may comprise at least:
- a forming device configured to form, transversally seal and transversally cut the tube for obtaining composite packs, in particular pillow packages; and
- a final folder configured to receive the composite packs from the forming device and to form composite packages 2 from the composite packs, in particular the pillow packages.

In even more detail, the forming device may comprise a plurality of pairs of one respective operative assembly and one respective counter-operative assembly, each operative assembly and each counter-operative assembly being configured to form and transversally seal and cut in cooperation the tube for forming one respective composite pack.

Additionally, the forming device may also comprise a conveying unit configured to advance the operative assemblies and the counter-operative assemblies along respective conveying paths. The respective operative assemblies and the respective counter-operative assemblies of each pair are configured to cooperate with one another for forming and transversally sealing and cutting the tube when advancing along respective operative portions of the respective conveying paths.

Moreover, each pair of one respective operative assembly and one respective counter-operative assembly comprises at least one respective transversal sealing unit configured to transversally seal, in use, the tube.

Additionally, filling machine 1 may also comprise:
- a sterilization device arranged upstream from the tube forming device along the advancement path and configured to sterilize (e.g. by means of physical and/or chemical sterilization) web 4 of multilayer composite packaging material 3.

Furthermore and with particular reference to Figure 2, filling machine 1 may also comprise a magazine unit, in particular defining inlet portion 9 of filling plant 1, for receiving web 4 of multilayer composite packaging 3, in particular when being wound-up on the bobbin.

In particular, the conveying device may be configured to advance web 4 of multilayer composite packaging 3 from the magazine unit to and towards the tube forming device and to advance the tube from the tube forming device to and at least partially through the package forming unit.

According to some preferred non-limiting embodiments, control device 5 may be configured to set the operational parameters of the conveying device and/or the tube forming device and/or the sealing device and/or the filling device and/or the package forming unit, in particular the forming device and/or the final folder, as a function of identification code 7 and/or the magazine unit and/or the sterilization device.

E.g. control device 5 may be configured to set one or more operational parameters of the conveying device such as an advancement speed (range) of web 4 and/or one or more operational parameters of the tube forming device and/or one or more operational parameters of the sealing device such as a sealing power and/or one or more operational parameters of the filling device such as e.g. a flow rate and/or one or more operational parameters of the package forming unit such as e.g. a sealing power of the transversal sealing units and/or an advancement rate of the operative assemblies and counter-operative assemblies and/or a hit position at which, in use, operative assemblies and/or counter-operative assemblies start to contact the tube and/or one or more operational parameters of the sterilization device.

In further detail, downstream treatment equipment 16 may comprise one or more of the following:
- a printing unit for printing information (such as a best before date and/or a lot number) and/or pictures (e.g. graphical representations, barcodes, QR codes, data matrixes, logo, symbols, etc.);
- a buffering unit for (temporarily) buffering composite packages 2; and/or
- a grouping unit (e.g. film wrappers, cartoon packers) for grouping and packaging a plurality of composite packages 2; and/or
- an application unit for applying auxiliary items, such as straws, information material, caps or other, onto composite packages 2.

Additionally, control device 5 may be configured to set the operational parameters of the printing unit and/or the buffering unit and/or the grouping unit and/or the application unit as a function of identification code 7.

In more detail, the grouping unit may comprise film wrappers and/or cartoon packers and/or any other packer, which may be adapted to bundle composite packages 2.

Furthermore, the application unit may comprise one or more of:
- a straw applicator for applying straws onto composite packages 2;
- a cap applicator for applying caps onto composite packages 2; and
- an information material applicator for applying information material onto composite packages 2.

In particular, control device 5 may be configured to set one or more operational parameters of the straw applicator and/or the cap applicator and/or the information material applicator.

It should be noted that according to some possible non-limiting embodiments, filling machine 15 may comprise a cap applicator for applying caps onto web 4. According to such possible embodiments, control device 5 may be configured to set one or more operational parameters of the cap applicator of filling machine 15.

Additionally, the printing unit may be configured to print information and/or pictures onto composite packages 2 and/or onto information sheets and/or onto wrapping material bundling a group of composite packages 2 and/or boxes containing a group of composite packages 2.

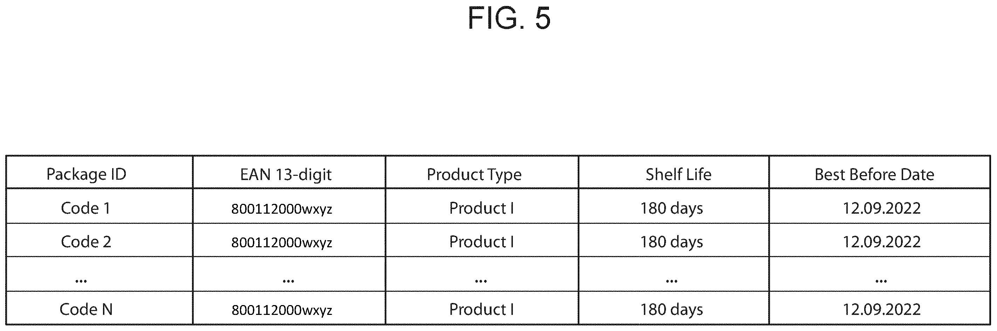

Alternatively or additionally, control device 5 may be configured to determine the best before date from the shelf life of the pourable food product associated to the respective identification code 7 (see Figure 5) and the production date and to control the printing unit such that the printing unit prints the determined best before date, in particular such that composite packages 2 are provided with the respective best before date (see Figure 6).

More specifically, each composite package 2 is identified by a respective package ID e.g. originating from a production batch. In the example of Figure 5 shown, each composite package 2 has the same identification code 7, in particular the same EAN (as originating from the same production batch). As the identification code 7 also defines the shelf life and as the production date is known, it is possible to automatically determine the Best Before Date.

Moreover, the printing unit may comprise one or more printing stations. In particular, the printing stations being distinct from one another.

It should be noted that filling plant 1 could comprise an auxiliary printing unit configured to print information such as the calculated best before date onto web **4.**

In use, filling plant 1 forms composite packages 2 from multilayer composite packaging material 3 and fills composite packages 2 with the pourable food product.

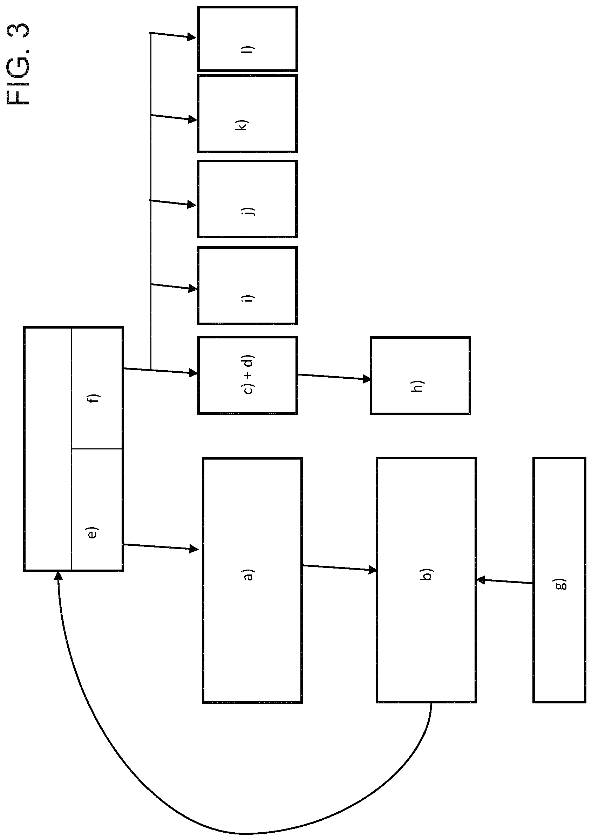

With particular reference to Figure 3, operation of filling plant 1 comprises at least the steps of:
a) receiving an identification code 7 indicative of the specific multilayer composite packaging material 3 and/or composite packages 2 and/or the pourable food product and to send a signal about identification code 7 to control device 5;
b) setting operational parameters of filling plant 1 as a function of identification code 7;
c) forming composite packages 2 from multilayer composite packaging material 3; and
d) filling composite packages 2 with the pourable food product.

More specifically, steps c) and d) are executed after steps a) and b).

In more detail, operation of filling plant 1 may also comprise the steps of:
e) setting filling plant 1 into the set-up configuration; and
f) setting filling plant into the production configuration.

Furthermore, when filling plant 1 is set in the set-up configuration the steps a) and b) are executed and when filling plant 1 is set in the production configuration, the steps of c) and d) are executed.

In more detail, prior to the execution of step f), step e) is executed.

Furthermore, during the step a), identification code 7 is automatically read, e.g. by means of the automatic reader.

According to some possible non-limiting embodiments, during step b) some operational parameters may define one or more of the following:
- the quality control protocol; and/or
- the test plan; and/or
- the cleaning-in-place protocol; and/or
- the sterilization-in-place protocol; and/or
- the production conditions (defining e.g. steps c) and/or d) of filling plant 1.

According to some possible non-limiting embodiments, operation of filling plant 1 may also comprise g) a step of modifying, during which (only) some of the operational parameters may be modified by a technical operator. In particular, step g) may be executed (directly) after step b) and/or during execution of steps c) and d).

Moreover, control device 5 may also modify a respective set of operational parameters and to overwrite the respective set of operational parameters or to create a new set of operational parameters.

According to some possible non-limiting embodiments, at least some of the operational parameters may define step c) and/or step d).

In more detail, during step c) web 4 may be formed into the tube, in particular by the tube forming device, may be longitudinally sealed, in particular by the sealing device, may be filled with the pourable food product, in particular by the filling device, and the tube may be formed and transversally sealed and cut, in particular by the package forming unit.

E.g. one or more operational parameters may define the formation of the tube and/or the longitudinal sealing of the tube and/or the filling of the tube and/or the forming and transversal sealing and cutting of the tube.

Moreover, operation of filling plant 1 may also comprise a step of sterilizing, during which web 4 is sterilized. One or more operation parameters may define the step of sterilizing.

Additionally, operation of filling plant 1 may also comprise h) a step of further treatments, in particular as determined by respective operational parameters, during which additional treatments may be executed on composite packages 2. In particular, step h) is executed after step c) and after step d). In particular, one or more operational parameters may define step h).

E.g. during step h) composite packages 2 may be temporarily buffered and/or items may be applied onto composite packages 2 and/or composite packages 2 may be grouped and packaged as groups of composite packages 2 and/or information and/or pictures may be printed onto composite packages 2 and/or onto information sheets and/or on wrapping material bundling groups of composite packages 2 and/or on boxes containing a group of composite packages 2.

In more detail, operation of filling plant 1 may comprise also at least one or more of the following steps:
i) controlling the quality of composite packages 2 following the quality control protocol;
j) executing the test plan so as to control the hygienic conditions within at least portions of filling plant 1;
k) cleaning at least portions of filling plant 1 according to the cleaning-in-place protocol; and
j) sterilizing at least portions of filling plant 1 according to the sterilization-in-place protocol.

According to some possible non-limiting embodiments, operation of filling plant 1 may also comprise:
- a step of determining, during which control device 5 may calculate the best before date in dependence of the shelf life associated to the identification code 7 and the production date of composite packages 2; and
- a step of printing during which the best before date may be printed onto the respective composite packages 2 or onto multilayer packaging material 3 and/or web 4, in particular by means of the printing unit or the auxiliary printing unit.

The advantages of filling plant 1 and/or its method of operation according to the present invention will be clear from the foregoing description.

In particular, by having the input device and by receiving identification code 7 and by control device 5 setting operational parameters of filling plant 1 as a function of identification code 7 it is possible to set-up filling plant 1 in a fast and automatic manner.

Another advantage resides in that no well-qualified technical operator needs to manually set the operational parameters.

Furthermore, an advantage resides in that the operational parameters are set at the correct moment. Thus, there is no risk that a technical operator forgets to update the operation parameters at the right moment.

An even other advantage is associated to use the barcodes and/or the European article number (EAN) present on multilayer composite packaging material 3 as no additional means are needed. In other words, identification code 7 is based on a codified information, which is anyways available.

Moreover, it is possible to automate the determination of the respective best before dates from the shelf life of the pourable product associated to the identification code 7 and to provide the determined best before date onto composite packages 2. This avoids the intervention of a technical operator.

Clearly, changes may be made to filling plant 1 and/or its method of operation as described herein without, however, departing from the scope of protection as defined in the accompanying claims.

## Claims

1. **-** Filling plant (1) for filling pourable food products into composite packages (2);
wherein the filling plant (1) is configured to form the composite packages (2) from a multilayer composite packaging material (3) and to fill the composite packages (2) with the pourable food product, the multilayer composite packaging material (3) being provided in the form of a web (4);
wherein the filling plant (1) comprises at least:
- a control device (5) configured to control operation of the filling plant (1); and
- an input device operatively connected to the control device (5),
the filling plant (1) **characterized in that** each blank of web carries a respective identification code, each blank carries the same identification code, insofar as the multiple composite packaging material and the respective composite packages to be formed are substantially identical and also the pourable food product to be filled is the same;
the input device is configured to receive the identification code (7) indicative of the specific multilayer composite packaging material (3) and/or the composite packages (2) and/or the pourable food product to be filled and to send a signal about the identification code (7) to the control device (5), the input device being configured to read the identification code (7) from the web (4);
wherein the control device (5) is configured to set operational parameters of the filling plant (1) as a function of the identification code (7),
wherein the filling plant (1) comprises a memory unit containing the operational parameters associated to the identification code (7), the memory unit containing a plurality of sets of operational parameters, each set being associated to one respective and unique identification code (7).

2. **-** Filling plant according to claim 1, wherein the control device (5) is configured to control the filling plant (1) at least into:
- a set-up configuration during which the input device is configured to receive the identification code (7) and during which the control device (5) itself is configured to set the operational parameters as a function of the identification code (7); and
- a production configuration during which the filling plant (1) is configured to form, in use, the composite packages (2) from the multilayer composite packaging material (3) and to fill, in use, the composite packages (2) with the pourable food product.

3. **-** Filling plant according to claim 1 or 2, wherein the identification code (7) is provided and/or codified in the form of a barcode and/or in the form of a RFID chip and/or a graphical symbol associated to and/or printed onto the multilayer composite packaging material (3) and/or corresponds to an European article number.

4. **-** Filling plant according to any one of the preceding claims, wherein the identification code (7) is indicative of a volume of the composite package (2) and/or the pourable food product and its characteristics and/or recipe information and/or details of the multilayer composite packaging material (3).

5. **-** Filling plant according to any one of the preceding claims, wherein the input device comprises an automatic reader for automatically reading the identification code (7).

6. **-** Filling plant according to any one of the preceding claims, wherein the operational parameters comprise indications about:
- a quality control protocol for determining and/or controlling the quality of the composite packages (2); and/or
- a test plan for assessing, in use, hygienic information during the forming and the filling of the composite packages (2); and/or
- a cleaning-in-place protocol; and/or
- a sterilization-in-place protocol.

7. **-** Filling plant according to any one of the preceding claims, further comprising at least:
- a filling machine (15) configured to form the composite packages (2) from the multilayer composite packaging material (3) and to fill the composite packages (2) with the pourable food product; and
- at least one downstream treatment equipment (16) configured to receive the composite packages (2) from the filling machine (15) and to execute, in use, one or more further treatment steps;
wherein the control device (5) is configured to set the operational parameters of the filling machine (15) and/or the downstream treatment equipment (16) as a function of the identification code (7).

8. **-** Filling plant according to claim 7, wherein the filling machine (1) comprises at least:
- a conveying device for advancing a web (4) of the multilayer composite packaging material (3) along an advancement path;
- a tube forming device for forming a tube from the web (4) of the multilayer packaging material (3);
- a sealing device for longitudinally sealing the tube;
- a filling device for filling the tube with the pourable food product; and
- a package forming unit for forming the tube and to transversally seal the tube for at least partially defining the composite packages (2);
wherein the control device (5) is configured to set the operational parameters of the conveying device and/or the tube forming device and/or the sealing device and/or the filling device and/or the package forming unit as a function of the identification code (7).

9. **-** Filling plant according to claim 7 or 8, wherein the downstream treatment equipment comprises one or more of the following:
- a printing unit for printing information and/or pictures;
- a grouping unit (e.g. film wrappers, cartoon packers) for grouping and packaging a plurality of the composite packages (2);
wherein the control device (5) is configured to set the operational parameters of the printing unit and/or the grouping unit as a function of the identification code (7).

10. **-** Method of operating a filling plant (1) for filling pourable food products into composite packages (2) by forming the composite packages from a multilayer composite packaging material and filling the composite packages with the pourable food product;
wherein the multilayer composite packaging material is provided in the form of a web;
wherein the method comprises at least the steps of:
- receiving, by means of an input device being configured to read an identification code from the web, the identification code (7) from the web (4) of multilayer composite packaging material (3), the identification code (7) indicative of the specific multilayer composite packaging material (3) and/or the composite packages (2) and/or the pourable food product to be filled, wherein each blank of web (4) carries a respective identification code (7), each blank carries the same identification code (7), insofar as the multiple composite packaging material (3) and the respective composite packages (2) to be formed are substantially identical and also the pourable food product to be filled is the same,
- sending a signal about the identification code (7) to a control device (5) of the filling plant (1);
- setting operational parameters of the filling plant (1) as a function of the identification code (7), wherein the filling plant (1) comprises a memory unit containing the operational parameters associated to identification code (7), the memory unit containing a plurality of sets of operational parameters, each set being associated to one respective and unique identification code (7);
- forming composite packages (2) from the multilayer composite packaging material (3); and
- filling the composite packages (2) with the pourable food product.

11. **-** Method according to claim 10, wherein the filling plant (1) is controllable at least into:
- a set-up configuration; and
- a production configuration;
wherein when the filling plant (1) is set in the set-up configuration the step of receiving and the step of setting are executed; and
wherein when the filling plant (1) is set in the production configuration, the step of forming and the step of filling are executed.

12. **-** Method according to claim 10 or 11, wherein the identification code (7) is provided and/or codified in the form of a barcode and/or a graphical symbol of the multilayer composite packaging material and/or corresponds to an European article number.

13. **-** Method according to any one of claims 10 to 12, wherein the identification code (7) is indicative of a volume of the composite packages (2) and/or about the food product and its characteristic and/or recipe information and/or details of the multilayer composite packaging material (3).

14. **-** Method according to any one of claims 10 to 13, wherein during the step of receiving, the identification code (7) is automatically read.

15. **-** Method according to any one of claims 10 to 14, wherein during the step of setting the operational parameters, one or more of the following is defined:
- a quality control protocol for determining and/or controlling the quality of the composite packages (2);
- a test plan for assessing according to the test plan itself hygienic information during the step of forming and the step of filling;
- a cleaning-in-place protocol for cleaning at least portions of the filling plant (1) according to the cleaning-in-place protocol;
- a sterilization-in-place protocol for sterilizing at least portions of the filling plant (1) according to the sterilization-in-place protocol.

## Patentansprüche

1. Abfüllanlage (1) zum Abfüllen von gießbaren Lebensmittelprodukten in Verbundverpackungen (2);
wobei die Abfüllanlage (1) dazu ausgelegt ist, die Verbundverpackungen (2) aus einem mehrschichtigen Verbundverpackungsmaterial (3) zu bilden und die Verbundverpackungen (2) mit dem gießbaren Lebensmittelprodukt zu befüllen, wobei das mehrschichtige Verbundverpackungsmaterial (3) in Form einer Bahn (4) vorgesehen ist;
wobei die Abfüllanlage (1) mindestens Folgendes umfasst:
- eine Steuervorrichtung (5), die dazu ausgelegt ist, den Betrieb der Abfüllanlage (1) zu steuern; und
- eine Eingabevorrichtung, die funktionell mit der Steuervorrichtung (5) verbunden ist,
wobei die Abfüllanlage (1) **dadurch gekennzeichnet ist, dass**
jeder Zuschnitt der Bahn einen jeweiligen Identifikationscode trägt, wobei jeder Zuschnitt denselben Identifikationscode trägt, sofern das Mehrfachverbundverpackungsmaterial und die jeweiligen zu bildenden Verbundverpackungen im Wesentlichen identisch sind und auch das zu abzufüllende gießbare Lebensmittelprodukt gleich ist;
die Eingabevorrichtung dazu ausgelegt ist, den Identifikationscode (7) zu empfangen, der das spezifische mehrschichtige Verbundverpackungsmaterial (3) und/oder die Verbundverpackungen (2) und/oder das abzufüllende gießbare Lebensmittelprodukt angibt, und ein Signal über den Identifikationscode (7) an die Steuervorrichtung (5) zu senden, wobei die Eingabevorrichtung dazu ausgelegt ist, den Identifikationscode (7) von der Bahn (4) zu lesen;
wobei die Steuervorrichtung (5) dazu ausgelegt ist, Betriebsparameter der Abfüllanlage (1) in Abhängigkeit von dem Identifikationscode (7) einzustellen,
wobei die Abfüllanlage (1) eine Speichereinheit umfasst, die die Betriebsparameter enthält, die mit dem Identifikationscode (7) assoziiert sind, wobei die Speichereinheit eine Mehrzahl von Sätzen von Betriebsparametern enthält, wobei jeder Satz mit einem jeweiligen und eindeutigen Identifikationscode (7) assoziiert ist.

2. Abfüllanlage nach Anspruch 1, wobei die Steuervorrichtung (5) dazu ausgelegt ist, die Abfüllanlage (1) mindestens in Folgendes zu steuern:
- eine Einrichtkonfiguration, während der die Eingabevorrichtung dazu ausgelegt ist, den Identifikationscode (7) zu empfangen, und während der die Steuervorrichtung (5) selbst dazu ausgelegt ist, die Betriebsparameter in Abhängigkeit von dem Identifikationscode (7) einzustellen; und
- eine Produktionskonfiguration, während der die Abfüllanlage (1) dazu ausgelegt ist, in Verwendung die Verbundpackungen (2) aus dem mehrschichtigen Verbundverpackungsmaterial (3) zu bilden und in Verwendung die Verbundpackungen (2) mit dem gießbaren Lebensmittelprodukt zu befüllen.

3. Abfüllanlage nach Anspruch 1 oder 2, wobei der Identifikationscode (7) in Form eines Barcodes und/oder in Form eines RFID-Chips und/oder eines mit dem mehrschichtigen Verbundverpackungsmaterial (3) assoziierten und/oder darauf aufgedruckten grafischen Symbols vorgesehen und/oder kodifiziert ist und/oder einer Europäischen Artikelnummer entspricht.

4. Abfüllanlage nach einem der vorhergehenden Ansprüche, wobei der Identifikationscode (7) ein Volumen der Verbundverpackung (2) und/oder des gießbaren Lebensmittelprodukts und seine Eigenschaften und/oder Rezeptinformationen und/oder Details des mehrschichtigen Verbundverpackungsmaterials (3) angibt.

5. Abfüllanlage nach einem der vorhergehenden Ansprüche, wobei die Eingabevorrichtung eine automatisches Lesegerät zum automatischen Lesen des Identifikationscodes (7) umfasst.

6. Abfüllanlage nach einem der vorhergehenden Ansprüche, wobei die Betriebsparameter Angaben über Folgendes umfassen:
- ein Qualitätssicherungsprotokoll zum Bestimmen und/oder Kontrollieren der Qualität der Verbundverpackungen (2); und/oder
- einen Prüfplan zum Beurteilen von Hygieneinformationen in Verwendung während des Bildens und Befüllens der Verbundverpackungen (2); und/oder
- ein Vor-Ort-Reinigungsprotokoll; und/oder
- ein Vor-Ort-Sterilisationsprotokoll.

7. Abfüllanlage nach einem der vorhergehenden Ansprüche, ferner mindestens Folgendes umfassend:
- eine Abfüllmaschine (15), die dazu ausgelegt ist, die Verbundverpackungen (2) aus dem mehrschichtigen Verbundverpackungsmaterial (3) zu bilden und die Verbundverpackungen (2) mit dem gießbaren Lebensmittelprodukt zu befüllen; und
- mindestens eine nachgeschaltete Behandlungseinrichtung (16), die dazu ausgelegt ist, die Verbundpackungen (2) von der Abfüllmaschine (15) zu empfangen und in Verwendung einen oder mehrere weitere Behandlungsschritte auszuführen;
wobei die Steuervorrichtung (5) dazu ausgelegt ist, die Betriebsparameter der Abfüllmaschine (15) und/oder der nachgeschalteten Behandlungseinrichtung (16) in Abhängigkeit von dem Identifikationscode (7) einzustellen.

8. Abfüllanlage nach Anspruch 7, wobei die Abfüllmaschine (1) mindestens Folgendes umfasst:
- eine Fördervorrichtung zum Vorschieben einer Bahn (4) des mehrschichtigen Verbundverpackungsmaterials (3) entlang eines Vorschubwegs;
- eine Schlauchbildungsvorrichtung zum Bilden eines Schlauchs aus der Bahn (4) des mehrschichtigen Verpackungsmaterials (3);
- eine Versiegelungsvorrichtung zum Längsversiegeln des Schlauchs;
- eine Abfüllvorrichtung zum Befüllen des Schlauchs mit dem gießbaren Lebensmittelprodukt; und
- eine Verpackungsbildungseinheit zum Bilden des Schlauchs und zum Querversiegeln des Schlauchs, um zumindest teilweise die Verbundpackungen (2) zu definieren;
wobei die Steuervorrichtung (5) dazu ausgelegt ist, die Betriebsparameter der Fördervorrichtung und/oder der Schlauchbildungsvorrichtung und/oder der Versiegelungsvorrichtung und/oder der Abfüllvorrichtung und/oder der Verpackungsbildungseinheit in Abhängigkeit von dem Identifikationscode (7) einzustellen.

9. Abfüllanlage nach Anspruch 7 oder 8, wobei die nachgeschaltete Behandlungseinrichtung eines oder mehrere von Folgenden umfasst:
- ein Druckeinheit zum Drucken von Informationen und/oder Bildern;
- eine Gruppierungseinheit (z. B. Folienhüllen, Kartonpacker) zum Gruppieren und Verpacken einer Mehrzahl der Verbundverpackungen (2);
wobei die Steuervorrichtung (5) dazu ausgelegt ist, die Betriebsparameter der Druckeinheit und/oder der Gruppierungseinheit in Abhängigkeit von dem Identifikationscode (7) einzustellen.

10. Verfahren zum Betreiben einer Abfüllanlage (1) zum Abfüllen von gießbaren Lebensmittelprodukten in Verbundverpackungen durch Bilden der Verbundverpackungen aus einem mehrschichtigen Verbundverpackungsmaterial (2) und Befüllen der Verbundverpackungen mit dem gießbaren Lebensmittelprodukt;
wobei das mehrschichtige Verbundverpackungsmaterial in der Form einer Bahn bereitgestellt wird;
wobei das Verfahren mindestens die folgenden Schritte umfasst:
- Empfangen mittels einer Eingabevorrichtung, die dazu ausgelegt ist, einen Identifikationscode von der Bahn zu lesen, des Identifikationscodes (7) von der Bahn (4) aus mehrschichtigem Verbundverpackungsmaterial (3), wobei der Identifikationscode (7) das spezifische mehrschichtige Verbundverpackungsmaterial (3) und/oder die Verbundverpackungen (2) und/oder das abzufüllende gießbare Lebensmittelprodukt angibt, wobei jeder Zuschnitt der Bahn (4) einen jeweiligen Identifikationscode (7) trägt, wobei jeder Zuschnitt denselben Identifikationscode (7) trägt, sofern das Mehrfachverbundverpackungsmaterial (3) und die jeweiligen zu bildenden Verbundverpackungen (2) im Wesentlichen identisch sind und auch das abzufüllende gießbare Lebensmittelprodukt gleich ist,
- Senden eines Signals über den Identifikationscode (7) an eine Steuervorrichtung (5) der Abfüllanlage (1);
- Einstellen von Betriebsparametern der Abfüllanlage (1) in Abhängigkeit von dem Identifikationscode (7), wobei die Abfüllanlage (1) eine Speichereinheit umfasst, die die Betriebsparameter enthält, die mit dem Identifikationscode (7) assoziiert sind, wobei die Speichereinheit eine Mehrzahl von Sätzen von Betriebsparametern enthält, wobei jeder Satz mit einem jeweiligen und eindeutigen Identifikationscode (7) assoziiert ist;
- Bilden von Verbundpackungen (2) aus dem mehrschichtigen Verbundverpackungsmaterial (3); und
- Befüllen der Verbundpackungen (2) mit dem gießbaren Produkt.

11. Verfahren nach Anspruch 10, wobei die Abfüllanlage (1) mindestens in Folgendes steuerbar ist:
- eine Einrichtkonfiguration; und
- eine Produktionskonfiguration;
wobei, wenn die Abfüllanlage (1) in der Einrichtkonfiguration eingestellt wird, der Schritt des Empfangens und der Schritt des Einstellens ausgeführt werden; und
wobei, wenn die Abfüllanlage (1) in der Produktionskonfiguration eingestellt wird, der Schritt des Bildens und der Schritt des Abfüllens ausgeführt werden.

12. Verfahren nach Anspruch 10 oder 11, wobei der Identifikationscode (7) in Form eines Barcodes und/oder eines grafischen Symbols des Mehrschichtverbundverpackungsmaterials bereitgestellt und/oder kodifiziert wird und/oder einer Europäischen Artikelnummer entspricht.

13. Verfahren nach einem der Ansprüche 10 bis 12, wobei der Identifikationscode (7) ein Volumen der Verbundverpackungen (2) und/oder des Lebensmittelprodukts und seine Eigenschaften und/oder Rezeptinformationen und/oder Details des mehrschichtigen Verbundverpackungsmaterials (3) angibt.

14. Verfahren nach einem der Ansprüche 10 bis 13, wobei während des Schritts des Empfangens der Identifikationscode (7) automatisch gelesen wird.

15. Verfahren nach einem der Ansprüche 10 bis 14, wobei während des Schritts des Einstellens der Betriebsparameter eines oder mehrere von Folgenden definiert werden:
- ein Qualitätssicherungsprotokoll zum Bestimmen und/oder Kontrollieren der Qualität der Verbundverpackungen (2);
- ein Prüfplan zum Beurteilen von Hygieneinformationen gemäß dem Prüfplan selbst während des Schritts des Bildens und des Schritts des Abfüllens;
- ein Vor-Ort-Reinigungsprotokoll zum Reinigen zumindest von Teilen der Abfüllanlage (1) gemäß dem Vor-Ort-Reinigungsprotokoll;
- ein Vor-Ort-Sterilisationsprotokoll zum Sterilisieren zumindest von Teilen der Abfüllanlage (1) gemäß dem Vor-Ort-Sterilisationsprotokoll.

## Revendications

1. Installation de remplissage (1) pour remplir des produits alimentaires pouvant être versés dans des emballages composites (2) ;
l'installation de remplissage (1) étant configurée pour former les emballages composites (2) à partir d'un matériau d'emballage composite multicouche (3) et pour remplir les emballages composites (2) avec le produit alimentaire pouvant être versé, le matériau d'emballage composite multicouche (3) étant fourni sous la forme d'une bande (4) ;
l'installation de remplissage (1) comprenant au moins :
- un dispositif de commande (5) configuré pour commander le fonctionnement de l'installation de remplissage (1) ; et
- un dispositif d'entrée connecté de manière opérationnelle au dispositif de commande (5), l'installation de remplissage (1) étant **caractérisée en ce que**
chaque découpe de bande porte un code d'identification respectif, chaque découpe porte le même code d'identification, dans la mesure où le matériau d'emballage composite multiple et les emballages composites respectifs à former sont sensiblement identiques et où le produit alimentaire pouvant être versé à remplir est également le même ;
le dispositif d'entrée est configuré pour recevoir le code d'identification (7) indicatif du matériau d'emballage composite multicouche spécifique (3) et/ou des emballages composites (2) et/ou du produit alimentaire pouvant être versé à remplir et pour envoyer un signal concernant le code d'identification (7) au dispositif de commande (5), le dispositif d'entrée étant configuré pour lire le code d'identification (7) de la bande (4) ;
où le dispositif de commande (5) est configuré pour régler les paramètres de fonctionnement de l'installation de remplissage (1) en fonction du code d'identification (7),
où l'installation de remplissage (1) comprend une unité de mémoire contenant les paramètres de fonctionnement associés au code d'identification (7), l'unité de mémoire contenant une pluralité d'ensembles de paramètres de fonctionnement, chaque ensemble étant associé à un code d'identification (7) respectif et unique.

2. Installation de remplissage selon la revendication 1, dans laquelle le dispositif de commande (5) est configuré pour commander l'installation de remplissage (1) au moins dans :
- une configuration de réglage pendant laquelle le dispositif d'entrée est configuré pour recevoir le code d'identification (7) et pendant laquelle le dispositif de commande (5) lui-même est configuré pour régler les paramètres de fonctionnement en fonction du code d'identification (7) ; et
- une configuration de production pendant laquelle l'installation de remplissage (1) est configurée pour former, en utilisation, les emballages composites (2) à partir du matériau d'emballage composite multicouche (3) et pour remplir, en utilisation, les emballages composites (2) avec le produit alimentaire pouvant être versé.

3. Installation de remplissage selon la revendication 1 ou la revendication 2, dans laquelle le code d'identification (7) est fourni et/ou codé sous la forme d'un code-barres et/ou sous la forme d'une puce RFID et/ou d'un symbole graphique associé et/ou imprimé sur le matériau d'emballage composite multicouche (3) et/ou correspond à un numéro d'article européen.

4. Installation de remplissage selon l'une quelconque des revendications précédentes, dans laquelle le code d'identification (7) est indicatif d'un volume de l'emballage composite (2) et/ou du produit alimentaire pouvant être versé et de ses caractéristiques et/ou d'informations de recette et/ou de détails du matériau d'emballage composite multicouche (3).

5. Installation de remplissage selon l'une quelconque des revendications précédentes, dans laquelle le dispositif d'entrée comprend un lecteur automatique pour lire automatiquement le code d'identification (7).

6. Installation de remplissage selon l'une quelconque des revendications précédentes, dans laquelle les paramètres opérationnels comprennent des indications concernant :
- un protocole de contrôle de la qualité pour déterminer et/ou contrôler la qualité des emballages composites (2) ; et/ou
- un plan de test pour évaluer, en cours d'utilisation, les informations d'hygiène pendant la formation et le remplissage des emballages composites (2) ; et/ou
- un protocole de nettoyage sur place ; et/ou
- un protocole de stérilisation sur place.

7. Installation de remplissage selon l'une quelconque des revendications précédentes, comprenant en outre au moins :
- une machine de remplissage (15) configurée pour former les emballages composites (2) à partir du matériau d'emballage composite multicouche (3) et pour remplir les emballages composites (2) avec le produit alimentaire pouvant être versé ; et
- au moins un équipement de traitement en aval (16) configuré pour recevoir les emballages composites (2) de la machine de remplissage (15) et pour exécuter, en utilisation, une ou plusieurs étapes de traitement supplémentaires ;
où le dispositif de commande (5) est configuré pour régler les paramètres de fonctionnement de la machine de remplissage (15) et/ou de l'équipement de traitement en aval (16) en fonction du code d'identification (7).

8. Installation de remplissage selon la revendication 7, dans laquelle la machine de remplissage (1) comprend au moins :
- un dispositif de transport pour faire avancer une bande (4) du matériau d'emballage composite multicouche (3) le long d'un chemin d'avancement ;
- un dispositif de formage de tube pour former un tube à partir de la bande (4) du matériau d'emballage multicouche (3) ;
- un dispositif de scellage pour sceller longitudinalement le tube ;
- un dispositif de remplissage pour remplir le tube avec le produit alimentaire pouvant être versé ; et
- une unité de formation d'emballage pour former le tube et pour sceller transversalement le tube afin de définir au moins partiellement les emballages composites (2) ; où le dispositif de commande (5) est configuré pour régler les paramètres de fonctionnement du dispositif de transport et/ou du dispositif de formage de tube et/ou du dispositif de scellage et/ou du dispositif de remplissage et/ou de l'unité de formage d'emballage en fonction du code d'identification (7).

9. Installation de remplissage selon la revendication 7 ou la revendication 8, dans laquelle l'équipement de traitement en aval comprend une ou plusieurs des unités suivantes :
- une unité d'impression pour imprimer des informations et/ou des images ;
- une unité de regroupement (par exemple des filmeuses, des encartonneuses) destinée à regrouper et emballer une pluralité d'emballages composites (2) ;
où le dispositif de commande (5) est configuré pour régler les paramètres de fonctionnement de l'unité d'impression et/ou de l'unité de regroupement en fonction du code d'identification (7).

10. Procédé de fonctionnement d'une installation de remplissage (1) pour remplir des produits alimentaires pouvant être versés dans des emballages composites en formant les emballages composites à partir d'un matériau d'emballage composite multicouche (2) et en remplissant les emballages composites avec le produit alimentaire pouvant être versé ;
où le matériau d'emballage composite multicouche est fourni sous la forme d'une bande ;
où le procédé comprend au moins les étapes suivantes :
- recevoir, au moyen d'un dispositif d'entrée configuré pour lire un code d'identification à partir de la bande, le code d'identification (7) de la bande (4) de matériau d'emballage composite multicouche (3), le code d'identification (7) indiquant le matériau d'emballage composite multicouche spécifique (3) et/ou les emballages composites (2) et/ou le produit alimentaire pouvant être versé à remplir, où chaque ébauche de bande (4) porte un code d'identification respectif (7), chaque ébauche porte le même code d'identification (7), dans la mesure où le matériau d'emballage composite multiple (3) et les emballages composites respectifs (2) à former sont sensiblement identiques et où le produit alimentaire pouvant être versé à remplir est également le même,
- envoyer un signal concernant le code d'identification (7) à un dispositif de commande (5) de l'installation de remplissage (1) ;
- régler des paramètres de fonctionnement de l'installation de remplissage (1) en fonction du code d'identification (7), l'installation de remplissage (1) comprenant une unité de mémoire contenant les paramètres de fonctionnement associés au code d'identification (7), l'unité de mémoire contenant une pluralité d'ensembles de paramètres de fonctionnement, chaque ensemble étant associé à un code d'identification (7) respectif et unique ;
- former les emballages composites (2) à partir du matériau d'emballage composite multicouche (3) ; et
- remplir les emballages composites (2) avec le produit alimentaire pouvant être versé.

11. Procédé selon la revendication 10, dans lequel l'installation de remplissage (1) peut être commandée au moins dans :
- une configuration de réglage ; et
- une configuration de production ;
où, lorsque l'installation de remplissage (1) est réglée dans la configuration de réglage, l'étape de réception et l'étape de réglage sont exécutées ; et
où, lorsque l'installation de remplissage (1) est réglée dans la configuration de production, l'étape de formage et l'étape de remplissage sont exécutées.

12. Procédé selon la revendication 10 ou la revendication 11, dans lequel le code d'identification (7) est fourni et/ou codé sous la forme d'un code-barres et/ou d'un symbole graphique du matériau d'emballage composite multicouche et/ou correspond à un numéro d'article européen.

13. Procédé selon l'une quelconque des revendications 10 à 12, dans lequel le code d'identification (7) est indicatif d'un volume des emballages composites (2) et/ou du produit alimentaire et de ses caractéristiques et/ou des informations de recette et/ou des détails du matériau d'emballage composite multicouche (3).

14. Procédé selon l'une quelconque des revendications 10 à 13, dans lequel, pendant l'étape de réception, le code d'identification (7) est lu automatiquement.

15. Procédé selon l'une quelconque des revendications 10 à 14, dans lequel, pendant l'étape de réglage des paramètres opérationnels, un ou plusieurs des éléments suivants sont définis :
- un protocole de contrôle de la qualité pour déterminer et/ou contrôler la qualité des emballages composites (2) ;
- un plan de test pour évaluer, conformément au plan de test lui-même, les informations d'hygiène pendant l'étape de formage et l'étape de remplissage ;
- un protocole de nettoyage sur place pour nettoyer au moins certaines parties de l'installation de remplissage (1) conformément au protocole de nettoyage sur place ;
- un protocole de stérilisation sur place pour stériliser au moins certaines parties de l'installation de remplissage (1) conformément au protocole de stérilisation sur place.
